Europäisches Patentamt

European Patent Office

Office européen des brevets

(19)

(11) Publication number: **0 332 303**
**A2**

# EUROPEAN PATENT APPLICATION

(12)

(21) Application number: 89301501.6

(22) Date of filing: 16.02.89

(51) Int. Cl.⁴: **G06F 12/08**

(30) Priority: 08.03.88 US 165219

(43) Date of publication of application:
**13.09.89 Bulletin 89/37**

(84) Designated Contracting States:
**DE FR GB**

(71) Applicant: International Business Machines
Corporation
Old Orchard Road
Armonk, N.Y. 10504(US)

(72) Inventor: Groves, Randall Dean
12404 Mercury Lane
Austin Texas 78727(US)
Inventor: Tuttle, David Paul
5803 Gibbs Hollow Cove
Austin Texas 78730(US)

(74) Representative: Hawkins, Anthony George
Frederick
IBM United Kingdom Limited Intellectual
Property Department Hursley Park
Winchester Hampshire SO21 2JN(GB)

(54) Data processing system with initialisation of cache memory.

(57) A data processing system has a cache memory
including a plurality of groups of locations each
group being defined by an associated cache line. A
multiplexer directs data from either a CPU or a
source of zero digits to the cache memory. To
selectively initialize the content of the cache mem-
ory, a group of zeros from the source is replicated
so as to correspond in number to the aggregate of
digits in a group and the replicated group of zeros is
applied to the locations in a group to be initialized.

FIG. 1

## DATA PROCESSING SYSTEM WITH INITIALISATION OF CACHE MEMORY

### DESCRIPTION

This invention relates to data processing systems and more specifically to initializing an information storage device for data processing systems.

A data processing system includes a central processing unit and a memory. The memory contains instructions to direct the central processing unit to perform computations upon data. This data is stored in the memory. Data in memory can also be temporarily stored in in a storage device termed a cache.

In systems where several processors are using the same cache or where several programs within a single CPU are using the same cache, it becomes necessary to insure that the data placed in a memory and/or a cache by one processor or program is not used unintentionally by another processor or program. Therefore, it is common to initialize a memory and/or a cache by loading zeroes into the memory and/or the cache before a processor or program begins to use the memory and/or the cache for storage.

It is an object of the present invention to provide an apparatus for quickly initializing the contents of a data cache.

In accordance with the invention, there is provided a data processing system including a cache memory for storing data in cache lines, each including a plurality of storage locations, control logic for controlling the entry of data into the storage locations, and multiplexer means coupled to a first data source through a first bus and to a second source, providing data of a fixed predetermined value, through a second data bus, said multiplexer being selectively operable under the control of the control logic to apply data either from the first data source or from the second source to cache lines of the cache memory.

An embodiment of the invention will now be described, by way of example, with reference to the accompanying drawings, in which:

Figure 1 is a block diagram of the data processing system;

Figure 2 is a flow chart illustrating the normal reloading of the data cache; and

Figure 3 is a flow chart illustrating the zeroing of a data cache line.

This invention relates to a mechanism for initializing a series of memory locations and more specifically for quickly initializing portions of a data cache memory. The data cache memory, in this invention, is used for temporary storage of data that is being transferred from a system memory 8 to a central processing unit 6 or from the central processing unit 6 to the memory 8.

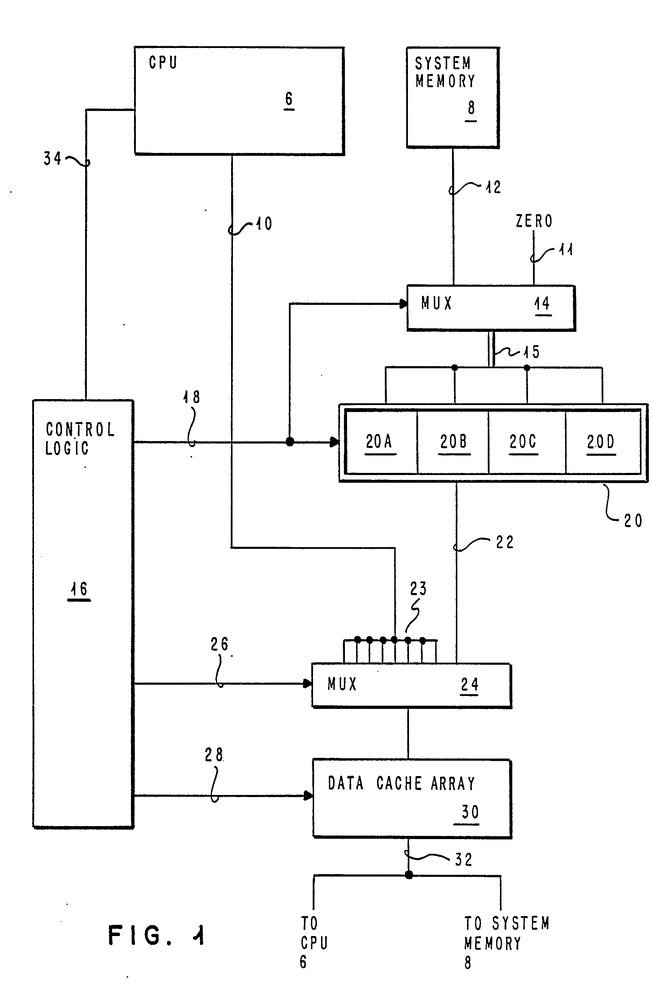

Figure 1 is a block diagram of a data processing system including a data cache array 30. In Figure 1, the CPU 6 is connected by a bus 10 through a multiplexor 24 to the data cache array 30. System memory 8 is connected by a bus 12 through a multiplexor 14 to a second bus 15 to a data cache reload buffer 20.

A cache reload buffer 20 is connected by bus 22 and the multiplexer 24 to the data cache array 30. In operation, the bus 10 from the CPU 6 provides 8 bytes in parallel. This 8 byte bus 10 is replicated 8 times to create a 64 byte input 23 to multiplexer 24. The reason for this replication is that the CPU bus is 8 bytes wide and the cache line size is 64 bytes. In order for the CPU to store into any one of the eight 8 byte locations within a cache line, the CPU bus must be connected to all eight of these locations. In addition, a 16 byte system memory bus is replicated four times for input to the 64 byte cache line for the same reason. Bus 12 from system memory 8 provides 16 bytes in parallel to multiplexer 14. Multiplexer 14 further includes an input 11 which has as its value zero. The output of Multiplexer 14 is replicated 4 times to create the 64 byte parallel bus 15. Additionally, multiplexer 14 with input 11 provides 64 bytes of zeroes in parallel on bus 15. The 64 byte bus 15 provides either the 16 byte bus 12 replicated 4 times to each of the four sections of cache reload buffer 20 or 64 bytes of zero.

Bus 15 presents the data to all four sections of cache reload buffer 20. When input 11 to multiplexer 14 is selected, bus 15 will contain 64 parallel bytes of zeroes. The cache reload buffer 20 contains four storage sections 20A, 20B, 20C and 20D a total of 64 bytes in width. The output of the cache reload buffer 20 on to bus 22 is 64 bytes in parallel. The cache reload buffer 20 serves to temporarily store data from system memory 8 or zeroed data before it is loaded into the data cache array 30. The four parts 20A, 20B, 20C and 20D of cache reload buffer 20 can be individually or simultaneously written. The operation of both multiplexer 14 and the cache reload buffer 20 is controlled by the control logic 16 via lines 18. Lines 18 provide control to the multiplexer 14 to determine the information source, i.e., bus 12 or zeroes on input 11. Additionally, the information on control lines 18 specify which of the four sections 20A, 20B, 20C and 20D of cache reload buffer 20 the 16 bytes from bus 12 are to be stored.

During one type of operation, unique data received from system memory during four consecutive system cycles is stored in the four different sections 20A, 20B, 20C and 20D of the cache reload buffer 20, filling this buffer. During a second type of operation, control logic 16 can also select all four sections of cache reload buffer 20 to receive the data from bus 15. This occurs only when multiplexer 14 input 11 is selected. When this is done, all four sections 20A, 20B, 20C and 20D of cache reload buffer 20 receive the value of zero simultaneously.

Bus 10 from CPU 6 is replicated 8 times to create a 64 byte input 23 to multiplexer 24. Multiplexer 24 receives 64 bytes at input 23 (bus 10's data repeated) and 64 bytes on but 22. Control logic 16 controls multiplexer 24 via lines 26. During the operation of interest, the bus 22 input of multiplexer 24 is selected by lines 26, thus presenting the 64 byte output of cache reload buffer 20 to the data cache array 30.

The data cache array 30 includes 256 lines (physical rows) of 64 bytes in parallel. Within each line, each byte of the 64 bytes is individually addressable through control lines 28 from control logic 16. Additionally, the control lines 28 provide for the data cache 30 to output on bus 32, 64 bytes in parallel. These bytes may be multiplexed to CPU 6 and system memory 8 to provide 8 and 16 bytes respectively to these units.

Control logic 16 operates in response to the decoding of instructions in the CPU 6. As an instruction is decoded in CPU 6, signals are provided on line 34 to the control logic 16 to properly operate data cache 30 and associated hardware. The control logic 16 regulates loading the data cache 30 from either the CPU 6 or the system memory 8 or zeroing a line in the data cache.

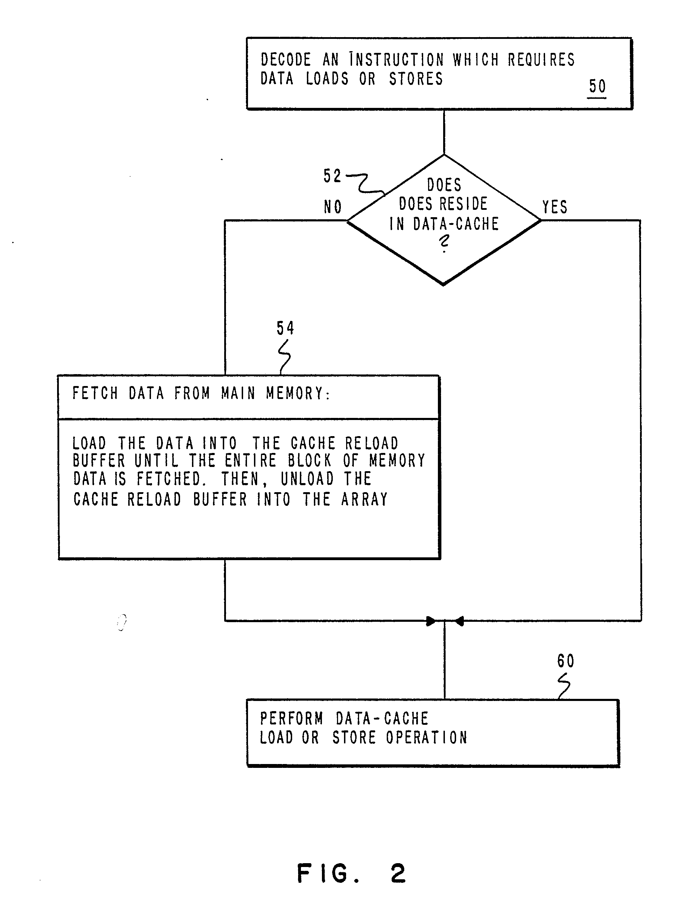

Referring to Figure 2, the instructions which affect data cache operation are ones which require CPU 6 to read or write data from or to the data cache array 30, i.e., LOAD or STORE instructions. Referring to Figure 2, step 50, a LOAD or STORE instruction is first decoded in the CPU. In Figure 2, step 52, the CPU 6 verifies whether the data to be read or written is in the data cache array 30. This verification is done by comparing the address associated with the data reference in the instruction with a directory of the existing contents of the data cache array 30. If it does not already reside in data cache array 30, it must be fetched from system memory 8 in step 54, in a process called a Data Cache Reload. This consists of loading data from system memory 8 over bus 12 through Multiplexer 14 and bus 15 to cache reload buffer 20. During four consecutive system cycles data is stored in the four different sections of 20A, 20B, 20C and 20D and cache reload buffer 20, filling this buffer.

Once it is filled, the contents of cache reload buffer 20 is then presented on bus 22 and the output of multiplexer 24.

Control logic 16 signals via lines 28 the data cache array 30 to receive and store the data from cache reload buffer 20. The process then proceeds to step 60.

Returning to step 52, if the data does reside in the data cache, then the process proceeds directly to step 60. In step 60, the information is fetched from the data cache array 30 and provided to CPU 6 in the case of a LOAD, or stored into the data cache array 30 from the CPU 6 in the case of a STORE instruction.

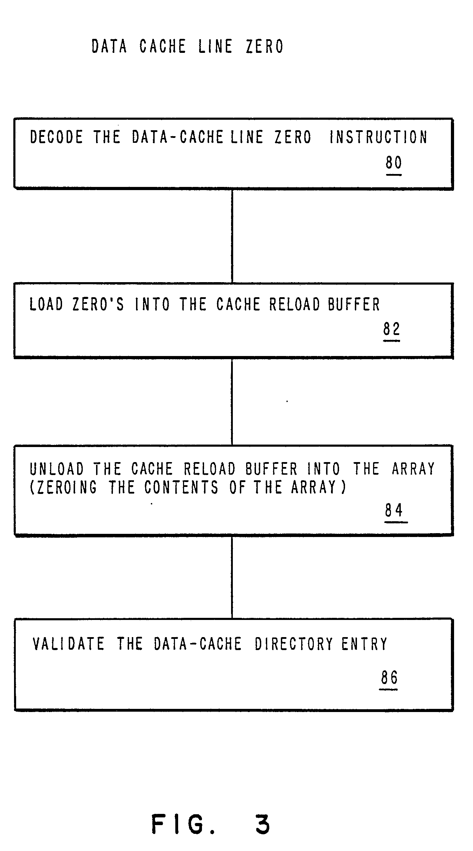

Figure 3 illustrates a flow chart detailing the operation of the control circuitry in Figure 1 for a line zero operation. In Figure 3 step 80, the instruction that zeroes the line in the data cache array 30 is decoded in CPU 6. The data address indicated by instruction will be zeroed in the data cache array 30. This information is provided to the control logic 16 via lines 34. In step 82, the zeroes from line 11 (Figure 1) are loaded through multiplexer 14 on to bus 15 into the cache reload buffer 20. In step 84, the contents of the cache reload buffer 20 are then loaded through bus 22 and multiplexer 24 into the line specified in the data cache array 30. In step 86, a flag is set in the directory which resides in CPU 6. This flag indicates that the data to be accessed by the given data reference address is now in the data cache array 30. In this manner, large portions of the cache can be initialized.

## Claims

1. A data processing system including a cache memory for storing data in cache lines, each including a plurality of storage locations, control logic for controlling the entry of data into the storage locations, and multiplexer means coupled to a first data source through a first bus and to a second source, providing data of a fixed predetermined value, through a second data bus, said multiplexer being selectively operable under the control of the control logic to apply data either from the first data source or from the second source to cache lines of the cache memory.

2. A data processing system according to claim 1 in which said fixed predetermined value is zero.

3. A data processing system according to claim 1 or claim 2 is which said first source is a CPU and the control logic is coupled to receive instruction signals from the CPU for determining the source of data applied to the cache memory.

4. A data processing system according to any one of the previous claims in which data from each of the first and second sources comprises a smaller number of digits than the aggregate of digits in the locations in a cache line, and including means for replicating the data from the first and second sources to provide inputs with digits corresponding in number to said aggregate of digits.

5. A data processing system according to claim 1 in which the digits generated by the first and second sources differ and the means for replicating the digits from the sources replicate by different multiples.

6. A method of operating a computer system for initialising locations in a cache memory, said locations being defined by a cache line common thereto, comprising the steps of:

decoding an instruction specifying initialisation of the memory;

in response to said decoding, commanding a multiplexer unit to pass data from a fixed data source to the memory; and

directing said data from the multiplexer to a group of locations in the memory coupled to a cache line defined by said decoded instruction.

FIG. 1

DECODE AN INSTRUCTION WHICH REQUIRES
DATA LOADS OR STORES                    50

52 — DOES
DOES RESIDE
IN DATA-CACHE
?

NO                                      YES

54

FETCH DATA FROM MAIN MEMORY:

LOAD THE DATA INTO THE CACHE RELOAD
BUFFER UNTIL THE ENTIRE BLOCK OF MEMORY
DATA IS FETCHED. THEN, UNLOAD THE
CACHE RELOAD BUFFER INTO THE ARRAY

60

PERFORM DATA-CACHE
LOAD OR STORE OPERATION

F I G.  2

DATA CACHE LINE ZERO

```
┌─────────────────────────────────────────────┐
│  DECODE THE DATA-CACHE LINE ZERO  INSTRUCTION │
│                                               │
│                        80                     │
└─────────────────────────────────────────────┘
                       │
                       │
┌─────────────────────────────────────────────┐
│  LOAD ZERO'S INTO THE CACHE RELOAD BUFFER     │
│                                               │
│                        82                     │
└─────────────────────────────────────────────┘
                       │
                       │
┌─────────────────────────────────────────────┐
│  UNLOAD THE CACHE RELOAD BUFFER INTO  THE ARRAY│
│  (ZEROING THE CONTENTS OF THE ARRAY)          │
│                                               │
│                        84                     │
└─────────────────────────────────────────────┘
                       │
                       │
┌─────────────────────────────────────────────┐
│  VALIDATE THE DATA-CACHE DIRECTORY ENTRY      │
│                                               │
│                        86                     │
└─────────────────────────────────────────────┘
```

FIG. 3